# EUROPEAN PATENT APPLICATION

(11) **EP 3 336 963 A1**
(43) Date of publication of application: **20.06.2018**
(21) Application number: 16306701.0
(22) Date of filing: 16.12.2016
(51) Int. Cl.: H01Q 1/12, H01Q 1/22, H01Q 1/24, H01Q 9/42

(54) **EDGE MOUNT LOW-PROFILE RADIO FREQUENCY ANTENNA**

(71) Applicant: Thomson Licensing, 92130 Issy-les-Moulineaux (FR)
(72) Inventor: AUBIN, Anthony, 35576 Cesson-Sévigné (FR); LO HINE TONG, Dominique, 35576 Cesson-Sévigné (FR); MINARD, Philippe, 35576 Cesson-Sévigné (FR); ZHAO, Lizhi, Beijing, Beijing 100192 (CN)
(74) Representative: Huchet, Anne

(57) **Abstract**

An antenna for use in a wireless system is described. The antenna includes a radiating element, at least one signal input portion and at least one signal output portion. The at least one signal input portion and the at least one signal output portion are both coupled to the radiating element. A portion of the radiating element is positioned outward from and parallel to an edge of the printed circuit board when the radio frequency antenna is attached to a surface of the printed circuit board of the wireless system.

## Description

### FIELD

The proposed apparatus is directed to a radio frequency antenna coupled to a printed circuit board of a wireless communication device.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Home-networking devices are becoming more and more important thanks to the various services that can be offered, in particular, through the numerous embedded wireless systems, for example, data and video wireless link service due to Wi-Fi systems, home-automation service using standards such as ZigBee, Zwave or 6LoWPAN, device remote control using for instance the Bluetooth or RF4CE protocol, and 3G/LTE based internet gateways. ZigBee is an IEEE 805.15.4-based specification for a suite of high-level communication protocols used to create personal networks with small, low-power digital radios. Z-Wave is a wireless communications protocol for home automation. 6LoWPAN is an acronym for IPv6 over Low power Wireless Personal Area Networks. RF4CE is a ZigBee application profile.

All of these embedded wireless systems lead to the use of many antennas that have to be integrated inside the device casing with drastic constraints in terms of cost and performance (antenna efficiency, radiation pattern, isolation etc.) and more crucially in terms of space.

The most cost-effective conventional way to introduce an antenna is to print the antennas onto the circuit board of the home networking device. However, most of the board areas, where antennas may be placed to provide proper radiation, are already occupied: the front side is often occupied by numerous push-buttons and a display, the left side by a smart card holder and a hard disk drive (HDD) and, as usual, the rear side has many connectors (e.g., USB, HDMI, Ethernet, DC-in) and the RF (e.g., DTV, cable or satellite) tuner. These electronic components create obstacles to the radiation of radio waves and impair antenna performance. Therefore, only the right side is available for on-board antenna integration, which is far from sufficient. Additionally, this region of the printed circuit board typically has a small clearance area size (e.g., less than 4 mm) requiring a low-profile antenna design.

### SUMMARY

The proposed apparatus relates to an antenna in a wireless system, for example, a home-networking electronic device, such as a set-top-box (STBs), gateway and smart home device. It will be appreciated that the proposed apparatus is not limited to any specific type of device and may be applied to any wireless communication device. The proposed apparatus in some embodiments is applied to an antenna provided on a smart-card of a home-networking device.

According to a first aspect of the invention, a radio frequency antenna is coupled to a printed circuit board. The radio frequency antenna includes a radiating element, at least one signal input portion and at least one signal output portion. The at least one signal input portion and the at least one signal output portion are both coupled to the radiating element. A portion of the radiating element is positioned outward from and parallel to an edge of the printed circuit board when the radio frequency antenna is attached to a surface of the printed circuit board.

In another embodiment, the radio frequency antenna operates at one or more frequency bands.

In another embodiment, the at least one signal input portion includes one or more pins which are coupled to a micro-strip line on the printed circuit board.

In another embodiment, the at least one signal output portion includes one or more pins which are coupled to a ground plane on the printed circuit board via one or more plated through holes.

In another embodiment, the at least one signal input portion includes one or more feet which are coupled to a micro-strip line on the printed circuit board.

In another embodiment, the at least one signal output portion includes one or more feet which are coupled to a ground plane on the printed circuit board via one or more plated through holes.

In another embodiment, a set top box includes one or more radio frequency antennas coupled to a printed circuit board.

In another embodiment, a device includes one or more radio frequency antennas coupled to a printed circuit board.

In another embodiment, a mobile phone includes one or more radio frequency antennas coupled to a printed circuit board.

### BRIEF DESCRIPTION OF THE DRAWINGS

The proposed apparatus is best understood from the following detailed description when read in conjunction with the accompanying drawings. The drawings include the following figures briefly described below:
**Fig. 1** depicts a typical circuit board architecture of a set top box, which is an example of a wireless communication device, in which embodiments of the invention may be implemented.
**Fig. 2** is an exemplary view of a prior art inverted F antenna.
**Fig. 3** is an exemplary view of the prior art inverted F antenna of Fig. 2 mounted onto a printed circuit board.
**Fig. 4** is a perspective first view of one embodiment of an antenna of the present disclosure.
**Fig. 5** is a perspective second view of the antenna shown in Fig 4.
**Fig. 6** is an unfolded view of the antenna shown in Figs 4-5.
**Fig. 7** is a perspective view of an antenna including a first embodiment of surface mount device (SMD) technology.
**Fig. 8** is a perspective view of an antenna including a second embodiment of surface mount device (SMD) technology.
**Fig. 9** is a partial view of an edge portion of a printed circuit board upon which the antenna is to be mounted using through hole technology.
**Fig. 10** shows the antenna mounted on the printed circuit board shown in Fig 9.
**Fig. 11 a** shows a side view along the width of the antenna depicted in Fig. 10.

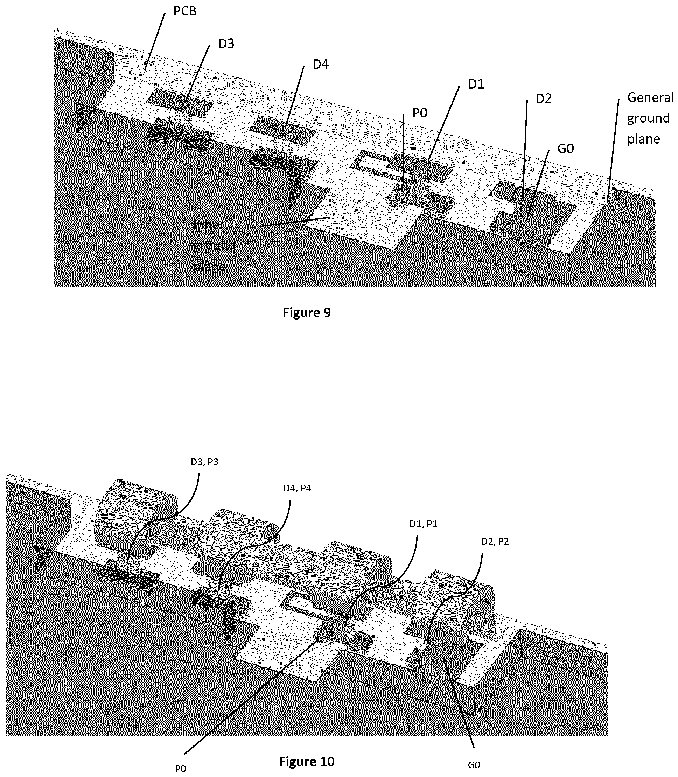

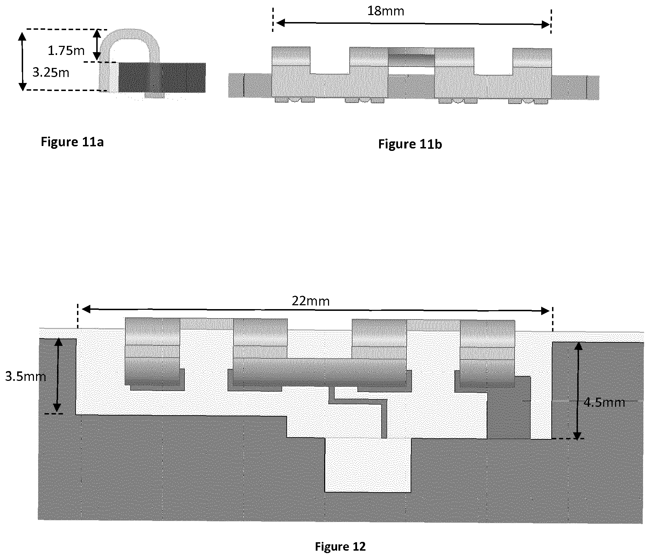

**Fig. 11 b** shows a side view along the length of the antenna depicted in Fig. 10.
**Fig. 12** shows a top view of the antenna mounted on the printed circuit board shown in Fig. 10.

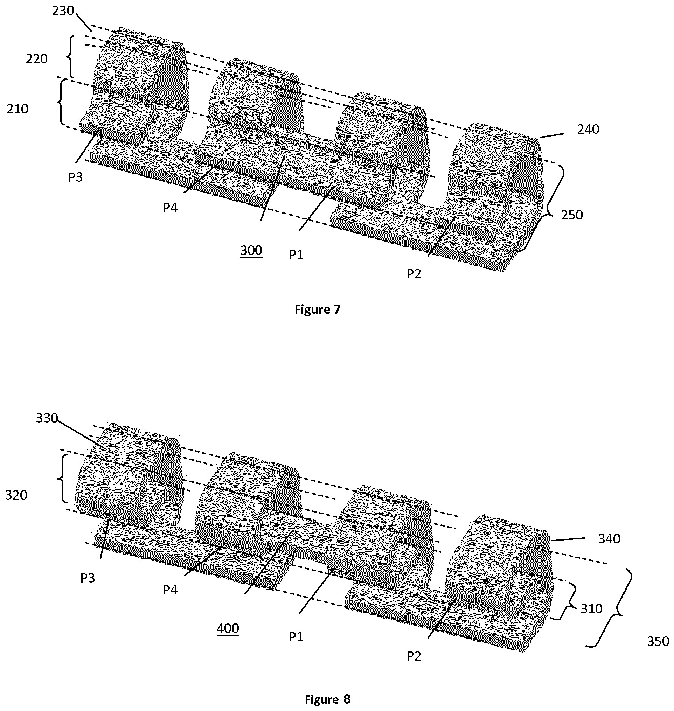

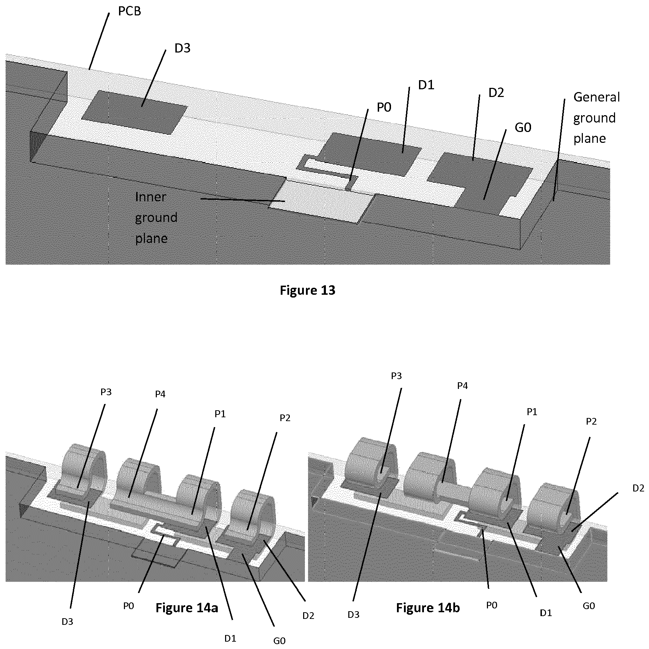

**Fig. 13** is a partial view of an edge portion of a printed circuit board where the antennas shown in Fig 7 (optionally Fig. 8) is to be mounted using surface mount device technology.
**Fig. 14a** shows the antenna mounted on the printed circuit board shown in Fig 13 using the first embodiment of surface mount device technology shown in Fig. 7.
**Fig. 14b** shows the antenna mounted on the printed circuit board shown in Fig 13 using the first embodiment of surface mount device technology shown in Fig. 8.

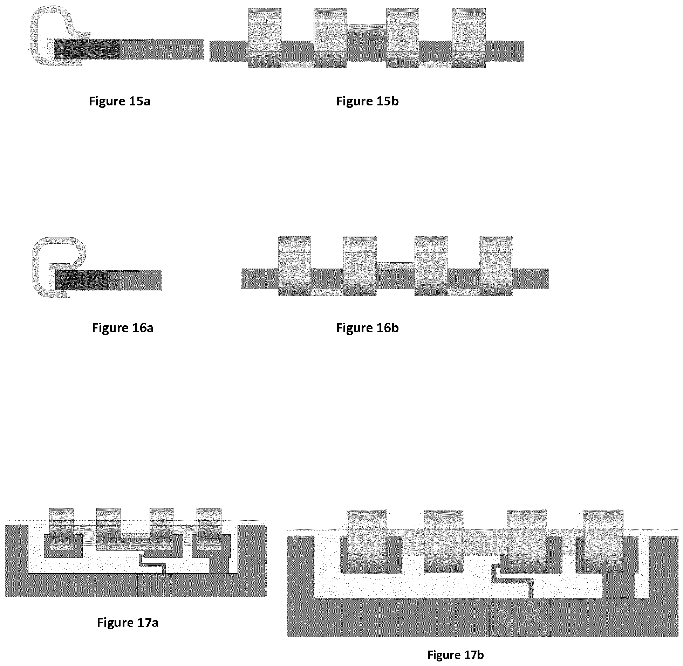

**Fig. 15a** shows a side view along the width of the antenna depicted in Fig. 14a.
**Fig. 15b** shows a side view along the length of the antenna depicted in Fig. 14a.
**Fig. 16a** shows a side view along the width of the antenna depicted in Fig. 14b.
**Fig. 16b** shows a side view along the length of the antenna depicted in Fig. 14b.
**Fig. 17a** shows a top view of the antenna mounted to the printed circuit board shown in Fig. 14a.
**Fig. 17b** shows a top view of the antenna mounted to the printed circuit board shown in Fig. 14b.

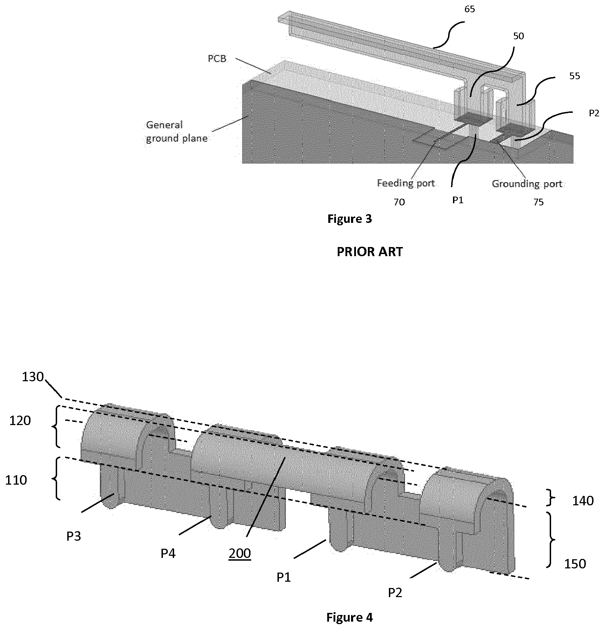

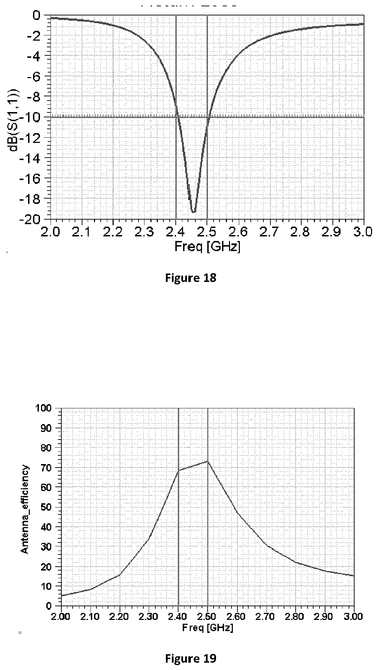

**Fig. 18** is a graph of the return loss response for the antenna shown in Fig. 3.
**Fig. 19** is a graph of the antenna efficiency for the antenna shown in Fig. 3.

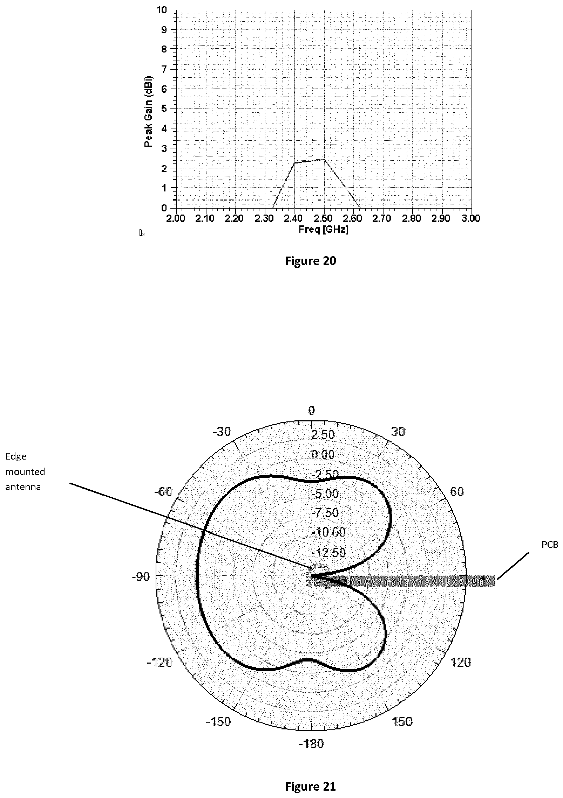

**Fig. 20** is a graph of the achieved peak gain for the antenna shown in Fig. 3.
**Fig. 21** a graph of the 2D cut radiation pattern in the printed circuit board orthogonal plane for the antenna shown in Fig. 3.

It should be understood that the drawings are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein is intended for educational purposes to aid the reader in understanding the principles of the disclosure and the concepts contributed by the inventors to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

A number of devices in accordance with embodiments of the invention will be described in what follows. One device relates to a set top box having one or more circuit boards on which one or more antennas of the present disclosure are coupled to a printed circuit board. Another device relates to a mobile phone having one or more circuit boards on which one or more antennas of the present disclosure are coupled to a printed circuit board.

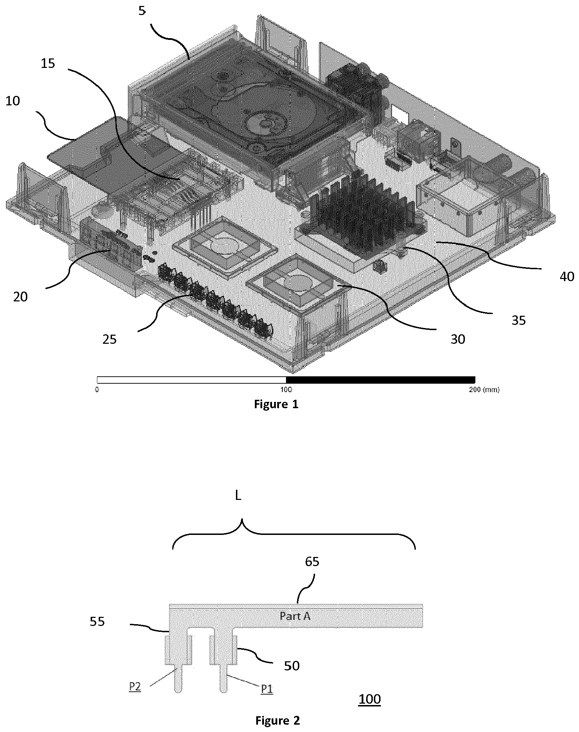

**Fig. 1** shows a portion of the electro-mechanical architecture of a set top box, which is an example of a wireless communication device in which embodiments of the invention may be implemented. The exemplary set top box includes a hard disk drive 5, a smart card 10, a smart card holder and interconnection pins 15 connecting the smart card holder to a main circuit board 40 (e.g., main printed circuit board). On the front of the set top box there is a display 20 and a plurality of push buttons 25 to control the set top box. There is at least one wireless chipset 130 and a system on a chip 35.

Embodiments of the invention are derived from a classical inverted F antenna (IFA), which primarily provides a single band operation. An example of an IFA antenna 100 fabricated using stamping metal technology is shown in Error! Reference source not found.. This antenna 100 contains two vertical metal strips 50, 55 which are both linked on the top by a horizontal metal strip 65, forming therefore an inverted F shape. Both vertical strips are terminated by a pin (P1 and P2) that are dedicated to be inserted in the respective hole formed in the PCB. The antenna is fed via the pin P1 and the return path to the ground is provided by the pin P2.

As known by people skilled in the art, length of the L segment formed by the grounding vertical strip and the horizontal strip (part A) is around a quarter of the wavelength, and the distance between the two vertical strips 50, 55 is tuned commonly in order to achieve the desired impedance matching.

Error! Reference source not found. shows how the IFA is conventionally mounted onto a top surface of the PCB, how it is fed by a micro-strip line 70 via feeding port and how the grounding pin P2 is connected to the PCB ground plane via grounding port 75.

From the conventional IFA, the goal of the invention is to create a balanced radiation pattern between each side of a PCB while minimizing the footprint depth of the antenna on the PCB, by bending the antenna toward the outside direction of the PCB, to position the antenna as much as possible in the same plane of the PCB ground plane.

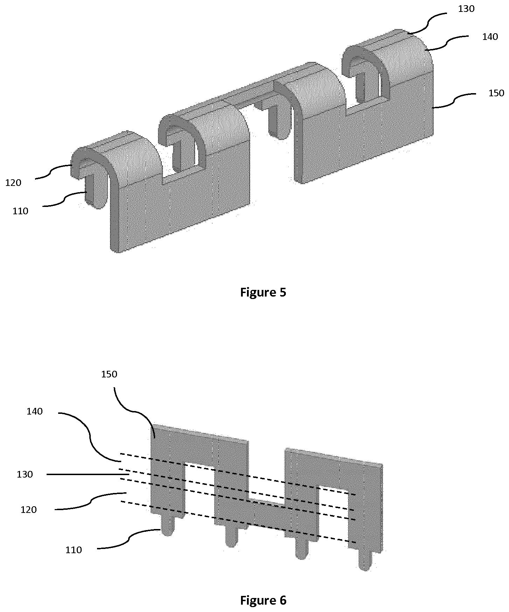

One embodiment of the antenna design of the disclosure is shown in Error! Reference source not found.**-5**. **Fig. 6** is an unfolded view of the antenna design shown in Figs. 4-5. This design is driven to meet the following requirements: stamping process compatible, very low profile, surface mountable, and pick-and-place assembly by machine.

Referring to Fig. 4, the antenna design 200 comprises three main parts. The part 110, comprises one or more ports P1 to PN with N>=1. Part 110 is to be inserted in plated through holes on the PCB, where the antenna is compatible with through hole technology. P1 is the antenna feeding port, P2 the antenna grounding port and P3 and P4 are open-cirucit ports. Depending on the function of the antenna type that is used to realize the antenna function (IFA, Loop, monopole, dipole, ....), the port P2 is optional as well the P3 (to PN) ports. The main purpose of the port P3 (... PN), is to better hold in place the antenna on the PCB during the soldering process (avoiding having the antenna to move or tip). In an extending way, the use of P1, P2 to PN can be modified and are given as an example. For example, the antenna structure may used a dual feeding port as function the antenna topology and two ground ports.

The parts comprising 120, 130, 140 extend from the at least one ports, in order to allow the antenna to extend away from the port plane. This bending allows the radiating portion of the antenna to be extended away from the ground of the PCB and to balance the radiated fields on both surfaces (e.g., top and bottom surfaces) of the PCB. These parts can be rounded or curved shapes as 120 and 140, or straight as 130. The part 130 can serve as a parallel plane realtively to the PCB plane, that allows the antenna to be picked and placed on an assembly line.

The part 150 ends the antenna profile in a plane almost parallel to the part 110. In order to reinforce the fixing of the antenna during the assembly process of the antenna onto the board at the factory, the two planes of parts 110 and 150 can have an angle difference (5° for example).

An additional advantage is related to the realiability of the antenna solution that doesn't suffer from any vibration, or any suspended metal strip that can suffer from unwanted bending during the manufacturing process. The way that all the parts and ports are folded and bent complies with stamping process. Additionally, the antenna has a low height profile over the top PCB layer, e.g., 1.75mm, which is almost the height of the part 120.

Referring to **Figs. 7-8****,** the designs 300, 400 include three main parts. The parts 210, 310, comprising at least one foot, P1 to PN with N>=1, is designed to be laid on the PCB where the antenna is compatible with surface mount device (SMD) technology P1 is the antenna feeding port, P2 the antenna grounding port and P3 and P4 are open-cirucit ports. Depending on the function of the antenna type that is used to realize the antenna function (IFA, loop, monopole, dipole, ....), the foot P2 is optional as well the P3 (to PN) feet. The main purpose of the feet P3 (... PN), is to better hold in place the antenna on the PCB during the soldering process (avoiding having the antenna to move or tip). In an extending way, the use of P1, P2 to PN can be modified and are given as an example.

The parts 220, 320; 230, 330; and 240, 340 extend from the at least one foot, in order to allaow the antenna to extend away from the foot plane. This bending allows the radiating portion of the antenna to be extended away from the ground of the PCB and to balance the radiated fields on both surfaces (e.g., top and bottom surfaces) of the PCB. These parts can be rounded shapes as 220, 320 and 240, 340, or straight as 230, 330. The parts 230, 330 can serve as a parallel plane realtively to the PCB plane, which allows the antenna to be picked and placed in an assembly line.

The parts 250, 350 of the antenna profile ends in a plane almost parallel to the parts 210, 310. In order to reinforce the fixing of the antenna during the assembly process of the antenna onto the printed circuit board at the factory, the two planes of parts 210, 310 and 250, 350 can have an angle difference (5° as example).

Error! Reference source not found.-Error! Reference source not found.Error! Reference source not found. show the antenna assembled onto the printed circuit board. I the exemplary embodiment shown in Fig. 9, the PCB has four vias with pads, D1 to D4. Referring to Fig. 10, D1 to D4 are used to host the antenna feet P1 to P4, respectively, of the antenna depicted in Fig. 4. The size of the pad D1 may be adjusted as function of the antenna response, thus it can be optimized in order to improve the impedance matching. The parameters (length, width and positioning) of the interconnection line printed between pad D2 and G0, is also a means to fine tune the antenna input impedance. The distance between the feeding port P0 and the grounding port G0 of the pad D2 is critical to fine tune the antenna impedance matching. The overall length of the unfolded antenna between open-circuit port P3 to the ground G0 is equal to a quarter wavelength at first order. In order to take into account of any plastic parts and substrate material in the vicinity of the antenna, the antenna performances can be fine-tuned by adjusting this overall length. As a function of the impedance matching optimization, the feeding port can be another port other than the port P1.

Fig. 11a shows a side view along the width of the antenna depicted in Fig. 10. Fig. 11b shows a side view along the length of the antenna depicted in Fig. 10. Referring to **Error! Reference source not found**.-11b, the achieved antenna size in one example is, 3.25 x 18 x 1.75 mm³. The antenna extends over the side of the PCB, by taking into account, the bending part that extends below the level of the PCB top surface.

Fig. 12 shows a top view of the antenna mounted on the printed circuit board shown in Fig. 10. Referring to Fig. 12, the length of the antenna along the edge of the PCB is about 22 mm and the antenna width extends into the plane of the PCB by about 3.5 to 4.5 mm.

Error! Reference source not found.-Error! Reference source not found., show the antennas depicted in Figs. 7-8, including the two variations of SMD technology, mounted onto a PCB. Referring to Fig. 13, the PCB may include three printed pads, D1 to D3, corresponding to the antenna feet P1 to P3, respectively. Fig. 14a shows the antenna mounted on the printed circuit board shown in Fig 13 using the first embodiment of surface mount device technology shown in Fig. 7. Fig. 14b shows the antenna mounted on the printed circuit board shown in Fig 13 using the first embodiment of surface mount device technology shown in Fig. 8. A fourth pad (not shown) for the foot P4 is optional, as the soldering of the antenna onto the PCB provides sturdy adhesion to the PCB with three pads. The size of the pad D1 may be adjusted as a function of the antenna response, thus it can be variable in order to improve the impedance matching. The parameters (length, width and positioning) of the interconnection line printed between pad D2 and G0, is also a means to fine tune the antenna input impedance. The distance between the feeding port P0 and the grounding port G0 of the pad D2 is critical to fine tune the IFA antenna impedance matching. The overall length of the unfolded antenna between open-circuit port P3 to the ground G0 is preferably equal to a quarter wavelength in the vacuum at first order. In order to take into account of any plastic parts and substrate material in the vicinity of the antenna, the antenna performances can be fine tune by adjusting this overall length. As function of the impedance matching optimization the feeding port can be another port other than the port P1.

Fig. 15a shows a side view along the width of the antenna depicted in Fig. 14a. Fig. 15b shows a side view along the length of the antenna depicted in Fig. 14a. Fig. 16a shows a side view along the width of the antenna depicted in Fig. 14b. Fig. 16b shows a side view along the length of the antenna depicted in Fig. 14b.

Fig. 17a shows a top view of the antenna mounted to the printed circuit board shown in Fig. 14a. Fig. 17b shows a top view of the antenna mounted to the printed circuit board shown in Fig. 14b.

An exemplary 2.4GHz WiFi antenna, such as that shown in Fig. 4, and mounted using through hole mount technology has been simulated using a HFSS™ 3D electromagnetic simulation tool. The dimensions of the housing are: 85 x 85 x 15 mm³, and those of the PCB are 80 x 80 x 1.2 mm³. The PCB substrate is FR4 based. Error! Reference source not found. shows the return loss response of the antenna, demonstrating it is well matched in 2.4 GHz frequency bands of the WLAN standard with the help of an impedance matching network. The antenna efficiency, plotted in Error! Reference source not found., is higher than 70% in the worst case at 2.4 GHz. The achieved peak gain depicted in Error! Reference source not found. is around 2dBi in 2.4GHz WiFi band. The 2D cut radiation pattern (in gain) in the PCB orthogonal plane is symmetric with a balanced level between the top and bottom sides of the PCB, as shown in **Fig. 21****.**

Herein, the phrase "coupled" is defined to mean directly connected to or indirectly connected with through one or more intermediate components. Such intermediate components may include both hardware and software based components.

Given the teachings herein, one of ordinary skill in the related art will be able to contemplate these and similar implementations or configurations of the proposed method and apparatus.

## Claims

1. An antenna (200), comprising:
a radiating element (120, 130, 140, 150);
at least one signal input portion (P1) coupled to the radiating element; and
at least one signal output portion (P2) coupled to the radiating element, wherein
at least a portion of the radiating element (150) is positioned outward from and parallel to an edge of a printed circuit board when said antenna is attached to a surface of said printed circuit board.

2. The antenna of claim 1, wherein the radiating element is configured to operate at one or more radio frequency bands.

3. The antenna according to any one of the preceding claims wherein the at least one signal input portion comprises one or more pins for coupling to a micro-strip line on the printed circuit board.

4. The antenna according to any one of the preceding claims wherein the at least one signal output portion comprises one or more pins for coupling to a ground plane on the printed circuit board via one or more plated through holes.

5. The antenna according to claims 1 or 2, wherein the at least one signal input portion comprises one or more feet for coupling to a micro-strip line on the printed circuit board.

6. The antenna according to claims 1 or 2, wherein the at least one signal output portion comprises one or more feet for coupling to a ground plane on the printed circuit board.

7. A set top box comprising:
a printed circuit board; and
one or more antennas according to any of claims 1 to 6 attached to the printed circuit board,
the at least a portion of the radiating element being positioned outward from and parallel to an edge of said printed circuit board.

8. A device, comprising:
a printed circuit board; and
one or more antennas according to any of claims 1 to 6 attached to the printed circuit board,
the at least a portion of the radiating element being positioned outward from and parallel to an edge of said printed circuit board.

9. A mobile phone, comprising:
a printed circuit board; and
one or more antennas according to any of claims 1 to 6 attached to the printed circuit board,
the at least a portion of the radiating element being positioned outward from and parallel to an edge of said printed circuit board.
